Europäisches Patentamt

European Patent Office

Office européen des brevets

(19)

(11) Veröffentlichungsnummer: **0 206 113**
**B1**

(12) # EUROPÄISCHE PATENTSCHRIFT

(45) Veröffentlichungstag der Patentschrift:
07.03.90

(51) Int. Cl.⁴: **G01N 30/24**

(21) Anmeldenummer: **86107943.2**

(22) Anmeldetag: **11.06.86**

(54) **Verfahren und Einrichtung zum automatischen Überführen kleiner Mengen flüssiger Proben in der Gaschromatographie.**

(30) Priorität: **20.06.85 DE 3522125**

(43) Veröffentlichungstag der Anmeldung:
**30.12.86 Patentblatt 86/52**

(45) Bekanntmachung des Hinweises auf die Patenterteilung:
**07.03.90 Patentblatt 90/10**

(84) Benannte Vertragsstaaten:
**AT CH DE FR GB IT LI NL**

(56) Entgegenhaltungen:
**EP-A- 0 071 091
EP-A- 0 121 110
DE-B- 1 673 028
GB-A- 1 179 459
US-A- 3 920 420**

(73) Patentinhaber: **Siemens Aktiengesellschaft,
Wittelsbacherplatz 2, D-8000 München 2(DE)**

(72) Erfinder: **Krebber, Ernst-Werner, Höhenstrasse 7,
D-7538 Keltern-Weiler(DE)**

## Beschreibung

Die Erfindung bezieht sich auf ein Verfahren und eine Einrichtung zum automatischen Überführen kleiner Mengen flüssiger Proben aus Probenflaschen in den temperaturprogrammierten Verdampfer eines gaschromatographischen Analysegeräts.

DE-B 1 673 028 betrifft eine Dosiervorrichtung für vorzugsweise flüssige Stoffe in der Gaschromatographie. Bei dieser Dosiervorrichtung wird durch alternierende Druckumschaltung jeweils eine vorgebbare Probenmenge aus einem Probenvorratsgefäß pneumatisch über eine Transferkapillare in einen Probenverdampfer gefördert. Eine Rückspülung der Proben führenden Leitungen ist nicht vorgesehen. Die Aufgabe, eine sehr kleine Probenmenge vollständig aus dem Probengefäß zu entnehmen und in den Probenverdampfer zu dosieren, kann mit dieser Vorrichtung nicht gelöst werden.

EP-A 121 110 beschreibt ein Verfahren zum Betrieb eines automatischen Probenzuführgerätes für Gaschromatographen und Gerät zur Durchführung des Verfahrens. Es findet eine zwischen Probenaufnahmestellung und Dosierstellung verfahrbare Dosierspritze mit Kanüle und mechanisch betätigbarem Kolben Verwendung, mit welcher aus einem Vorratsgefäß Probenflüssigkeit in bestimmter Menge entnommen werden kann, wobei in dem Spritzenzylinder Reinigungsflüssigkeit als Pufferschicht zwischen Probe und Teilen der Dosierspritze wirkt. Mittels einer Vorwärtsspülung wird Spritze und Kanüle gereinigt. Die zu dosierende Menge der Probenflüssigkeit wird über den Hubweg des Kolbens bestimmt, eine vollständige Entnahme einer in dem Probenvorratsgefäß befindlichen Probe ist dieser Literaturstelle nicht zu entnehmen.

Bei den bekannten Dosiereinrichtungen sind Probenmengen zwischen 20 und 100 µl Probenflüssigkeit nötig, um eine volumetrisch bestimmte Probenmenge von 1 µl in den Injektor dosieren zu können.

Probenmengen in dieser Größenordnung stehen jedoch häufig nicht zur Verfügung, beispielsweise dann nicht, wenn es um die Untersuchung physiologischer Flüssigkeiten geht, die in Mengen von 1 bis 2 µl anfallen.

Es besteht demgemäß die Aufgabe, auch bei sehr kleinen Probenmengen in der Größenordnung um 1 µl eine zur Analyse ausreichende Menge dosieren zu können, wobei Totvolumen in der Übertragungsstrecke zwischen Probengefäß und Injektor zu vermeiden sind.

Eine Lösung der Aufgabe wird mit einem Verfahren bzw. einer Einrichtung angegeben, die die Merkmale des Anspruchs 1 bzw. 2 aufweist.

Mit diesem Verfahren bzw. dieser Einrichtung kann die gesamte Probe aus der Probenflasche in die Trennsäule überführt werden, d. h. auch kleinste Probenmengen in der Größenordnung von 1 µl sind noch dosierbar.

Da die Überführung und Injektion der Probe pneumatisch mit Hilfe von Trägergas erfolgt, befinden sich keine Ventile oder ähnliches in der Übertragungsstrecke zwischen Probenflasche und Verdampfer, sie ist praktisch totvolumenfrei.

Das volumetrische Abmessen der zu dosierenden Probenmenge kann entfallen.

Weitere Einzelheiten sind der nachfolgenden Beschreibung eines Ausführungsbeispiels in Verbindung mit den abhängigen Ansprüchen zu entnehmen.

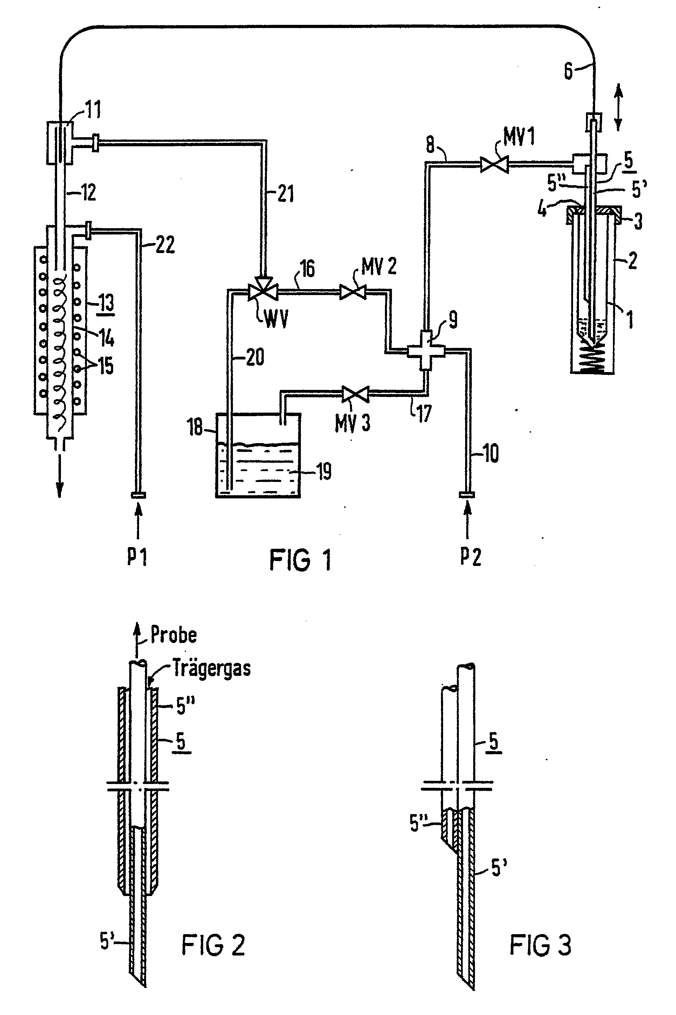

Figur 1 zeigt schematisch die Überführungseinrichtung, in den Figuren 2 und 3 sind Ausführungsbeispiele von den bei der Aufnahme der Probe benützten Doppelhohlnadeln dargestellt.

Figur 1: Eine kleine Menge Probenflüssigkeit, etwa 1 µ, befindet sich in dem konisch zulaufenden unteren Teil einer Probenflasche 1, die axial federnd in einem Probengefäß 2 angeordnet und mit einem dicht schließenden Deckel 3 versehen ist.

In dem Deckel 3 befindet sich ein durchstechbares Septum 4, durch welches eine vertikal bewegbare Doppel-Hohlnadel 5 in die Probenflasche 1 einführbar ist.

Die Doppel-Hohlnadel 5 besteht aus einer längeren Hohlnadel 5', welche bis auf den Grund der Probenflasche 1 reicht. Die zweite Hohlnadel 5" ist kürzer, sie mündet in den Raum oberhalb des Flüssigkeitsspiegels in der Probenflasche 1. Das obere Ende der Hohlnadel 5' ist an eine Transferkapillare 6 angeschlossen, deren Innendurchmesser 0,1 bis 0,15 mm beträgt, während das obere Ende der zweiten Hohlnadel 5" über eine Druckleitung 8 mit dem Magnetventil MV1 an einen Verteiler 9 angeschlossen ist. Dieser wird über die Leitung 10 aus einer Trägergasquelle mit dem konstanten Druck $p_2$ gespeist.

Die Transferkapillare 6 mündet innerhalb eines T-Stücks 11 in eine Zwischenkapillare 12 mit einem Innendurchmesser zwischen 0,3 und 0,5 mm.

Diese Zwischenkapillare 12 mündet ihrerseits in das Innenrohr 14 eines temperaturprogrammierbaren Verdampfers 13, welches von einer Heiz- und Kühlwicklung 15 umgeben ist und mit der hier nicht gezeichneten gaschromatographischen Trennsäule in Verbindung steht.

Von dem über die Leitung 10 mit Trägergas des Drucks $p_2$ beaufschlagten Verteiler 9 geht eine weitere, ein Magnetventil MV2 enthaltende Leitung 16 aus, welche in einen Anschluß eines Dreiwegeventils WV führt.

Eine weitere, von dem Verteiler 9 ausgehende Leitung 17 führt über ein Magnetventil MV3 zu einem Behälter 18, der eine Spülflüssigkeit 19 enthält, und mündet dort oberhalb des Flüssigkeitsspiegels.

Aus dem Behälter 18 führt eine bis auf dessen Grund reichende Leitung 20 zu dem zweiten Anschluß des Dreiwegeventils WV, dessen Ausgang über eine Leitung 21 mit dem dritten Anschluß des T-Stücks 11 verbunden ist.

In den oberen Abschluß des Innenrohrs 14 im temperaturprogrammierbaren Verdampfer 13 mündet eine Leitung 22, die mit einer Trägergasquelle des konstanten Drucks $p_1$ verbunden ist. $p_1$ ist kleiner als $p_2$.

Der automatische Dosiervorgang läuft folgendermaßen ab: Alle Magnetventile und das Dreiwegeventil sind geschlossen.

Das Probengefäß 2 mit der Probenflasche 1 wird in Aufnahmeposition gebracht und die Doppel-Hohlnadel 5 durch das Septum 4 vertikal abgesenkt, bis die längere Hohlnadel 5' in die am Grund der kegelförmigen Vertiefung der Probenflasche 1 befindliche Flüssigkeitsprobe eintaucht.

Das Magnetventil MV1 wird geöffnet, das über die zweite kürzere Hohlnadel 5" in die Probenflasche 1 eintretende Trägergas drückt die Probe vollständig in die Hohlnadel 5' und von dort über die Transferkapillare 6 in die Zwischenkapillare 12.

Während Magnetventil MV1 in der Leitung 8 schließt, öffnet das Magnetventil MV2 in der Leitung 16, welche über das Dreiwegeventil WV und die Leitung 21 Trägergas in das T-Stück 11 und dort in die Zwischenkapillare 12 speist, wodurch die Probe vollständig in das Innenrohr 14 des kalten Verdampfers geführt wird, wo sie beispielsweise in einer Glaswollefüllung festgehalten wird.

Die Doppelnadel 5 wird aus dem Probengefäß herausgezogen, das Magnetventil MV2 schließt und das Magnetventil MV3 öffnet, wodurch über die Leitung 17 Trägergas mit dem Druck p₂ in den Spülflüssigkeitsbehälter 18 eintritt und die Spülflüssigkeit 19 über die Leitung 20 und das entsprechend umgeschaltete Dreiwegeventil WV in die Leitung 21 und von dort in das T-Stück 11 drückt.

Da das Druckgefälle p₂ gegen Atmosphärendruck am Ausgang der Hohlnadel 5' größer ist als das Druckgefälle p₂ gegen p₁ am Eingang des temperaturprogrammierbaren Verdampfers 14, wird die Spülflüssigkeit über die Transferkapillare 6 durch die Hohlnadel 5' gedrückt und der gesamte Leitungsweg rückgespült. Gleichzeitig wird die Heizung 15 im temperaturprogrammierbaren Verdampfer 13 eingeschaltet, die darin befindliche flüssige Probe schlagartig verdampft und durch das über die Leitung 22 eintretende Trägergas des Drucks p₁ in die Trennsäule befördert. Das Magnetventil MV3 schließt, MV2 öffnet und das Dreiwegeventil verbindet die Leitungen 16 und 21, so daß der Leitungsweg über die Transferkapillare 6 und die Hohlnadel 5' trockengeblasen werden kann.

Ein folgendes Probengefäß wird in Aufnahmestellung gebracht und der automatische Dosiervorgang wiederholt sich.

In Figur 2 ist eine Ausführungsform der Doppel-Hohlnadel 5 dargestellt.

Sie besteht aus zwei koaxial ineinander angeordneten Hohlnadeln 5' und 5", wobei die innere Hohlnadel 5', wie bereits beschrieben, von solcher Länge ist, daß sie bis auf den Grund einer Probenflasche reicht. Die äußere kürzere Hohlnadel 5" dient zur Zuführung des Trägergases über den zwischen den beiden Hohlnadeln 5' und 5" gebildeten Ringspalt zur pneumatischen Förderung der Probe.

Figur 3 zeigt eine andere Ausführungsform der Doppel-Hohlnadel 5. Sie besteht aus zwei parallel miteinander verbundenen Hohlnadeln 5' und 5", vorzugsweise gleichen Durchmessers, aber verschiedener Länge, wobei die Hohlnadel 5' zur Förderung der Probe und die Hohlnadel 5" zur Zuführung des Trägergases dient.

## Patentansprüche

1. Verfahren zum automatischen Dosieren kleiner Mengen flüssiger Proben aus Probenflaschen in den temperaturprogrammierbaren Verdampfer eines gaschromatographischen Analysegerätes mit den Schritten:

a) eine mit einem durchstechbaren Septum (4) versehene, lediglich die zu dosierende Menge enthaltende Probenflasche (1) wird in Arbeitsstellung unterhalb einer vertikal bewegbaren Doppelhohlnadel (5) gebracht;

b) die aus zwei Hohlnadeln (5', 5") unterschiedlicher Länge bestehende Doppelhohlnadel (5) wird, das Septum (4) durchstechend, abgesenkt, wobei die eine längere Hohlnadel (5') zur vollständigen Aufnahme der Probe bis auf den Grund der Probenflasche (1) reicht und über die kürzere, oberhalb der Probe mündenden Hohlnadel (5") Trägergas unter Druck zugeführt wird;

c) die pneumatisch geförderte Probe wird über eine an die längere Hohlnadel (5') angeschlossene Transferkapillare (6) dem kalten temperaturprogrammierbaren Verdampfer (13) zugeführt und dort festgehalten;

d) die Doppelhohlnadel (5) wird aus der Probenflasche (1) herausgezogen, gleichzeitig wird die Trägergaszufuhr in die kürzere Hohlnadel (5") gesperrt;

e) die Transferkapillare (6) und die längere Hohlnadel (5') wird mit einer mittels Trägergas geförderten Spülflüssigkeit (19) rückgespült;

f) anschließend wird der gespülte Leitungsweg mittels Trägergas trockengeblasen.

2. Einrichtung zum automatischen Dosieren kleiner Mengen flüssiger Proben aus Probenflaschen in den temperaturprogrammierbaren Verdampfer eines gaschromatographischen Analysegerätes und zur Durchführung des Verfahrens nach Anspruch 1 mit:

— Probenflaschen (1) mit konisch ausgebildetem unteren Teil,

— einer vertikal bewegbaren Doppelhohlnadel (5), bestehend aus einer längeren Hohlnadel (5') und einer kürzeren Hohlnadel (5"),

— einer Transferkapillare (6), die einerseits an das obere Ende der längeren Hohlnadel (5'), andererseits an eine in einem T-Stück (11) befindliche, in den Verdampfer (13) mündende Zwischenkapillare (12) angeschlossen ist,

— einem über eine Leitung (10) aus einer Trägergasquelle gespeisten Verteiler (9), dessen einer Anschluß über eine ein Magnetventil (MV1) enthaltende Druckleitung (8) mit dem oberen Ende der kürzeren Hohlnadel (5") verbunden ist,

dessen zweiter Anschluß über eine ein Magnetventil (MV2) enthaltende Leitung (16) mit einem Anschluß eines Dreiwegeventils (WV) verbunden ist

und dessen dritter Anschluß mit einer ein Magnetventil (MV3) enthaltenden Leitung (17) verbunden ist, welche in einem Behälter (18) für Spülflüssigkeit (19) oberhalb des Flüssigkeitsspiegels mündet,

— einer vom Grund des Behälters (18) ausgehenden, zu dem zweiten Anschluß des Dreiwegeventils (WV) führenden Leitung (20) und

— einer Leitung (21), die den dritten Anschluß des Dreiwegeventils (WV) mit dem dritten Anschluß des T-Stücks (11) verbindet.

3. Einrichtung nach Anspruch 2, dadurch gekennzeichnet, daß die Transferkapillare (6) einen Innendurchmesser von 0,1 bis 0,15 mm aufweist.

4. Einrichtung nach Anspruch 2, dadurch gekennzeichnet, daß die Doppelhohlnadel (5) aus zwei parallel miteinander verbundenen Hohlnadeln (5', 5") vorzugsweise gleichen Durchmessers besteht.

5. Einrichtung nach Anspruch 2, dadurch gekennzeichnet, daß die Doppelhohlnadel (5) aus zwei koaxial ineinander angeordneten Hohlnadeln (5', 5") besteht.

## Claims

1. A method for automatic dosing of small quantities of liquid samples from sample vials into the temperature-programmable vaporizer of a gaschromatographic analytic apparatus, using the following steps:

a) a sample vial (1), provided with a septum (4) able to be pierced, containing only the quantity to be dosed, is brought into the operating position below a vertically mobile double hollow needle (5);

b) the double hollow needle (5) consisting of two hollow needles (5', 5") of varying length is lowered, the septum (4) being pierced, wherein the one longer hollow needle (5') reaches the base of the sample vial (1) for complete admission of the sample, and carrier gas is supplied under pressure by way of the shorter hollow needle (5") opening above the sample;

c) the pneumatically conveyed sample is supplied by way of a transfer capillary (6), attached to the longer hollow needle (5'), to the cold temperature-programmable vaporiser (13), and held there;

d) the double hollow needle (5) is pulled out from the sample vial (1), at the same time the carrier gas supply in the shorter hollow needle (5") is cut off;

e) the transfer capillary (6) and the longer hollow needle (5') is flushed back by means of a cleaning liquid conveyed by a carrier gas;

f) finally the cleaned transmission path is blown dry by means of a carrier gas.

2. A device for automatic dosing of small quantities of liquid samples from sample vials into the temperature-programmable vaporiser of a gaschromatographic analytic apparatus and for carrying out the method according to claim 1 with:

- sample vials (1) with a conically formed lower part,
- a vertically mobile double hollow needle (5), consisting of a longer hollow needle (5') and a shorter hollow needle (5"),
- a transfer capillary (6), which, on the one hand, is attached to the upper end of the longer hollow needle (5'), and, on the other hand, to an intermediate capillary (12) opening into the vaporizer (13) and located in a t-piece (11),
- a distributer (9) supplied by way of a line (10) from a carrier gas source, the one connection of which is connected, by way of a pressure line (8) containing a magnetic valve (MV1), to the upper end of the shorter hollow needle (5"), the second connection of which is connected, by way a line (16) containing a magnetic valve (MV2), to a connection of a three-way valve (WV), and the third connection of which is connected to a line (17) containing a magnetic valve (MV3), which opens into a receptacle (18) for cleaning liquid (19) above the liquid level,

- a line (20) emanating from the base of the receptacle (18) leading to the second connection of the three-way valve (WV) and
- a line (21) which connects the third connection of the three-way valve (WV) to the third connection of the T-piece (11).

3. A device according to claim 2, characterised in that the transfer capillary (6) has an inner diameter of 0.1 to 0.15 mm.

4. A device according to claim 2, characterised in that the double hollow needle (5) consists of two parallel hollow needles (5', 5") attached to each other, preferably of the same diameter.

5. A device according to claim 2, characterised in that the double hollow needle (5) consists of two hollow needles (5', 5") arranged coaxially in each other.

## Revendications

1. Procédé de dosage automatique de petites quantités d'échantillons liquides de flacons d'échantillonnage dans l'évaporateur programmable en température d'un appareil d'analyse de chromatographie en phase gazeuse, comprenant les stades :

a) un flacon d'échantillonnage (1) muni d'un septum (4), qui peut être transpercé et contenant seulement la quantité à doser, est placé en la position de travail, en-dessous d'une canule double (5) mobile verticalement ;

b) la canule double (5), constituée de deux canules (5', 5") de longueurs différentes, est abaissée en perçant le septum (4), la canule la plus longue (5') allant, pour le prélèvement complet de l'échantillon, jusqu'au fond du flacon d'échantillon (1) et du gaz porteur sous pression étant amené par la canule la plus courte (5") débouchant au-dessus de l'échantillon ;

c) l'échantillon transporté pneumatiquement est envoyé à l'évaporateur (13) froid et programmable en température, en passant par un tube capillaire de transvasement (6) relié à la canule la plus longue (5') et y est maintenu ;

d) la canule (5) est retirée du flacon d'échantillonnage (1) et simultanément l'arrivée du gaz porteur à la canule la plus courte (5") est fermée ;

e) le tube capillaire de transfert (6) et la canule la plus longue (5') sont lavés transvasement à contre-courant au moyen d'un liquide de lavage (19) transporté au moyen du gaz porteur ;

f) ensuite, le trajet de conduit qui a été lavé est séché par insufflation au moyen du gaz porteur.

2. Dispositif de dosage automatique de petites quantités d'échantillons liquides de flacons d'échantillonnage dans l'évaporateur programmable en température d'un appareil d'analyse par chromatographie en phase gazeuse et pour la mise en œuvre du procédé suivant la revendication 1, comprenant :

- un flacon d'échantillonnage ayant une partie inférieure de forme conique,

- une canule double (5) mobile verticalement, constituée d'une canule longue (5') et d'une canule courte (5"),
- un tube capillaire de transvasement (6) qui communique, d'une part, avec l'extrémité supérieure de la canule la plus longue (5') et, d'autre part, avec un tube capillaire intermédiaire (12) se trouvant dans une pièce en T (11) et débouchant dans l'évaporateur (13),
- un répartiteur (9) alimenté par un conduit (10), à partir d'une source de gaz porteur et dont l'un des raccords communique, par un conduit sous pression (8) dans lequel est montée une électrovanne (MV1), avec l'extrémité supérieure de la canule la plus courte (5") et dont le deuxième raccord communique, par un conduit (16) dans lequel est montée une électrovanne (MV2), avec un raccord d'une vanne à trois voies (WV),
et dont le troisième raccord communique avec un conduit (17) dans lequel est montée une électrovanne (MV3), conduit (17) qui débouche au-dessus du niveau du liquide dans une cuve (18) pour du liquide de lavage (19),
- un conduit (20) issu du fond de la cuve (18) et menant au deuxième raccord de la vanne à trois voies (WV), et
- un conduit (21) qui met en communication le troisième raccord de la vanne à trois voies (WV) avec le troisième raccord de la pièce en T (11).

3. Dispositif suivant la revendication 2, caractérisé en ce que le tube capillaire de transvasement (6) a un diamètre intérieur de 0,1 à 0,15 mm.

4. Dispositif suivant la revendication 2, caractérisé en ce que la canule (5) est constituée de deux canules (5', 5") montées en parallèle et, de préférence, de même diamètre.

5. Dispositif suivant la revendication 2, caractérisé en ce que la canule double (5) est constituée de deux canules (5', 5") disposées coaxialement l'une dans l'autre.

FIG 1

P1

P2

FIG 2

Probe

Trägergas

5"

5

5'

FIG 3

5

5"

5'